# DEMANDE DE BREVET EUROPEEN

(11) **EP 2 865 737 A1**
(43) Date de publication de la demande: **29.04.2015**
(21) Numéro de dépôt: 13190495.5
(22) Date de dépôt: 28.10.2013
(51) Int. Cl.: C10M 177/00, G04B 15/14, C10N 80/00

(54) **Produit noble épilame**

(71) Demandeur: The Swatch Group Research and Development Ltd., 2074 Marin (CH)
(72) Inventeur: Richard, David, 1400 Yverdon-les-Bains (CH); Letondor, Christophe, 2000 Neuchâtel (CH)
(74) Mandataire: Tournel, Maxime Jean-Joseph

(57) **Abrégé**

La présente invention concerne un produit épilamé (10) comprenant un substrat (20) sur lequel un épilame (30) est déposé, caractérisé en ce que le produit comporte en outre une couche d'accroche (40) située entre le substrat et l'épilame et possédant une affinité chimique avec ledit épilame.

## Description

La présente invention concerne un produit comprenant un substrat délicat comme de l'Or ou du Rhodium sur lequel une couche d'épilame est déposée.

### Art antérieur

Le bon fonctionnement d'un mouvement horloger dépend entre autre de sa lubrification. La durabilité du lubrifiant dépend notamment de son maintien dans la zone de fonctionnement : tout horloger a cependant constaté qu'une goutte de lubrifiant s'étale rapidement sur une pièce propre. Le lubrifiant tient en place quand sa tension superficielle est plus haute que celle du support sur lequel ladite huile est placée. Si la tension superficielle de l'huile est trop basse, l'huile s'étale et ne reste pas à sa place.

Pour résoudre cela, le support est épilamé. Pour cela, une couche d'épilame, généralement sous la forme d'une couche moléculaire invisible hydrophobe et oléophobe, est déposée afin d'éviter l'étalement du lubrifiant et de ses composants.

Cet épilame est un produit qui modifie dans un sens ou dans un autre la tension superficielle apparente du support. En effet, soit il accroche le lubrifiant pour qu'il reste en place soit il le repousse pour le maintenir dans des zones bien déterminées.

Il existe deux catégories d'épilames : les épilames « mécaniques » qui se fixent mécaniquement au substrat et les épilames « chimiques » sont globalement composés de 2 parties: l'ancre (qui favorisera l'accroche chimique avec le substrat) et le corps fonctionnel (qui donne le pouvoir épilame à la molécule, via des fluores par exemple).

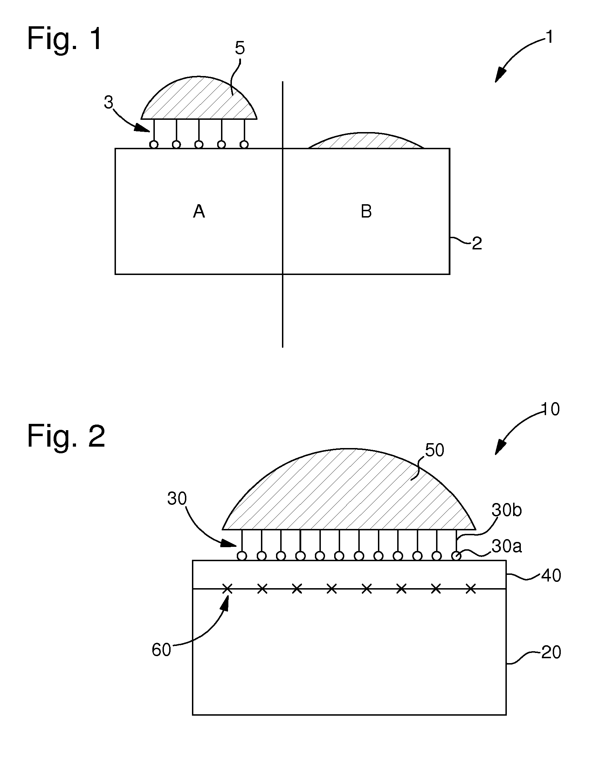

Un inconvénient actuel réside dans le fait que les épilames mécaniques ont naturellement une résistance aux lavages limitée (peu d'accroche chimique avec les surfaces car pas optimisés forcément pour, et encore moins avec l'or et le rhodium de par leur nature chimique de surface). L'agitation, les bains de nettoyage, la température des solutions, etc. participent donc à leur dégradation. Sur la figure 1, un produit 1 comportant un support 2 non adapté à un épilame 3 est représenté. Ce support 2 doit porter un lubrifiant 5.

Sur la zone A, un épilame 3 est placé sur le support permettant au lubrifiant d'être maintenu sur ledit support 2. Sur la zone B, il s'agit du même support 2 ayant subi des lavages horlogers. On constate que l'épilame 3 n'est plus présent.

Actuellement, les épilames chimiques utilisés sont des épilames possédant une ancre de type « silane ». Lors du dépôt de cet épilame sur un substrat de type acier, les oxydes de surfaces naturellement présents permettent un ancrage covalent ou fort entre l'ancre silane et l'oxyde de surface.

Pour les épilames chimiques, un inconvénient apparait dans le cas où le substrat est délicat. Un substrat délicat est un substrat pouvant être en or, en rhodium ou en plastique. Dans ce cas, les ancres habituelles des épilames (ancre de type silane) qui aiment se fixer sur les oxydes de surfaces n'arrivent pas à se fixer chimiquement sur les surfaces de type dorées ou rhodiées car les affinités chimiques sont limitées. De ce fait, seul un ancrage mécanique semblable à celui d'une couche de peinture sur un support est réalisé et un tel substrat n'offre pas une résistance aux lavages horlogers suffisante.

### Résumé de l'invention

L'invention concerne un produit épilamé qui pallie les inconvénients de l'art antérieur c'est-à-dire qui permet de fournir un produit dont l'épilame ou couche moléculaire Epilame est résistant aux lavages horlogers peu importe la nature du substrat.

A cet effet, l'invention concerne un produit épilamé comprenant un substrat sur lequel un épilame est déposé, **caractérisé en ce que** le produit comporte en outre une couche d'accroche située entre le substrat et l'épilame et possédant une affinité chimique avec ledit épilame.

Dans un premier mode de réalisation, l'épilame comprend une partie ancre et une partie fonctionnelle, ladite couche d'accroche ayant une affinité chimique avec ladite partie ancre.

Dans un second mode de réalisation, l'ancre est du type silane et la couche d'accroche est un oxyde.

Dans un troisième mode de réalisation, l'oxyde de la couche d'accroche est choisi dans la liste comprenant l'oxyde de silicium, l'oxyde d'aluminium, le dioxyde de titane ou une combinaison de ces éléments.

Dans un quatrième mode de réalisation, le substrat possède peu d'affinité chimique avec l'épilame.

Dans un autre mode de réalisation, le substrat est un polymère.

Dans un autre mode de réalisation, le substrat présente une surface rhodiée ou dorée.

Dans un autre mode de réalisation, la couche d'accroche est transparente.

Dans un autre mode de réalisation, la couche d'accroche a une épaisseur de 1 à 500 nm.

La présente invention concerne également une pièce d'horlogerie comprenant le produit épilamé selon l'invention.

### Brève description des figures

Les buts, avantages et caractéristiques de selon la présente invention apparaîtront plus clairement dans la description détaillée suivante d'au moins une forme de réalisation de l'invention donnée uniquement à titre d'exemple non limitatif et illustrée par les dessins annexés sur lesquels :
La figure 1 représente schématiquement le produit épilamé selon l'art antérieur.
La figure 2 représente schématiquement le produit épilamé selon la présente invention.

### Description détaillée

La figure 2 représente le produit épilamé 10 selon la présente invention. Un tel produit comprend un substrat 20. Ce substrat 20 est le produit sur lequel l'épilame 30 ou couche moléculaire Epilame sera posé. Ce produit 10 peut être une pièce d'un mouvement d'horlogerie comme un pont ou la platine. Ce produit 10 peut également être une pièce d'un objet micromécanique comme une boîte à musique. Bien entendu, il est possible que ce produit puisse convenir à toutes les applications utilisant un épilame. L'application horlogère sera celle utilisée dans la suite de la description.

Le substrat 20 est réalisé dans un premier matériau qui peut être un matériau connu de l'horlogerie comme l'acier ou le laiton.

Sur ce substrat, une couche d'épilame 30 chimique doit être déposée. Un épilame chimique 30 est généralement composé de deux parties : une partie appelée ancre 30a qui favorisera l'accroche chimique avec le substrat 20 et une partie appelée corps fonctionnel 30b qui donne le pouvoir épilame à la molécule, via des fluores par exemple.

Afin d'assurer une bonne accroche de l'épilame 30 sur le substrat 20, peu importe la nature du substrat, la présente invention consiste à prévoir une couche d'accroche 40 située entre le substrat 20 et l'épilame 30 comme visible à la figure 2.

Avantageusement, cette couche d'accroche 40 possède la particularité de présenter une bonne affinité avec le substrat quel qu'il soit ainsi qu'une bonne affinité avec l'épilame 30 de sorte que la liaison entre la couche d'accroche 40 et l'épilame 30 soit forte. Cette affinité de la couche d'accroche 40 avec le substrat 20 et l'épilame 30 permet une bonne accroche de l'épilame 30 avec le substrat 20 peu importe la nature du substrat 20. Les croies 60 visibles à la figure 2 montrent que l'affinité entre le support 20 et la couche 40 permet d'avoir une accroche forte.

Le choix de la couche d'accroche se fait en fonction de l'épilame choisi. En effet, la partie appelée l'ancre 30a qui favorisera l'accroche chimique avec le substrat 20 n'est pas universelle de sorte qu'il n'existe pas une ancre qui réagit avec tous les substrats 20. Il devient donc nécessaire d'adapter l'ancre 30a et la couche d'accroche 40 pour avoir de bonnes affinités.

Par exemple, une ancre habituelle est une ancre 30a de type silane. Les ancres silanes se caractérisent en étant des composés chimiques de formule X-Sin-Rm(avec R qui peut être un atome d'hydrogène, ou un alkyl ou un hétéroalkyl et X pouvant être de l'Or, du Chlore ou du Brome) qui sont présentés comme des analogues siliciés des alcanes. Ces ancres 30a de types silanes ont une bonne affinité avec les oxydes de surface. La couche d'accroche 40 peut alors être composée d'oxyde comme de l'oxyde de silicium SiO2, de l'alumine ou oxyde d'aluminium A1203, dioxyde de titane TiO2 ou une combinaison de ces trois éléments. Pour ce type de couche d'accroche 40, des ancres 30a de type dérivé phosphonique ou katechol peuvent être également utilisées.

Ainsi, il devient possible de réaliser des produits épilamés ayant comme substrat 20 dit délicat comme ceux réalisés avec des matériaux de type plastiques comme des polymères ou des matériaux dorés ou rhodiés qui présentent naturellement une mauvaise accroche avec l'épilame 30 ayant une ancre du type silane. Le support 20 peut aussi être un support en métal de type acier présentant une surface dorée ou rhodiée.

Pour réaliser un tel produit épilamé 10, une première étape consiste à se munir du substrat 20 c'est-à-dire la pièce qui doit recevoir l'épilame 30.

Une fois muni de ce substrat 20, une étape de dépôt est réalisée. Cette étape de dépôt consiste à déposer la couche d'accroche 40 sur le substrat 20. Pour cela, plusieurs méthodes peuvent être utilisées.

Une première méthode consiste à utiliser une technique d'évaporation sous vide. Cette technique d'évaporation sous vide repose sur deux processus élémentaires : l'évaporation d'une source chauffée et la condensation à l'état solide de la matière évaporée sur le substrat. L'évaporation a lieu sous vide, c'est-à-dire dans un environnement gazeux, vapeur de dépôt exclue, contenant extrêmement peu de particules. Dans ces conditions, les particules de matière peuvent se propager jusqu'à la cible sans collision avec d'autres particules (Par exemple dans un vide de 10⁻⁴ Pa, une particule de 0.4-nm de diamètre à un libre parcours moyen de 60 m, c'est-à-dire qu'elle peut parcourir en moyenne soixante mètres avant de rentrer en collision avec une autre particule). En effet, la collision de différents atomes durant l'évaporation peut provoquer des réactions susceptibles de modifier la nature du dépôt souhaité. Par exemple, en présence d'oxygène, l'aluminium formera de l'oxyde d'aluminium. Ce phénomène peut aussi diminuer la quantité de vapeur déposée.

Une autre méthode consiste à utiliser une méthode d'évaporation par flash. Dans cette méthode d'évaporation flash, la matière à déposer est sous forme d'un fil qui est continuellement dévidé et évaporé par contact avec une barre de céramique très chaude.

Une autre méthode utilisée est la technique de dépôt de couche atomique (ALD: Atomic Layer Deposition). Cette méthode est un procédé de dépôt de couches minces atomiques. Le principe consiste à exposer une surface successivement à différents précurseurs chimiques afin d'obtenir des couches ultra-minces.

La couche d'accroche déposée est ainsi accrochée au substrat. La couche déposée présente une épaisseur d'environ 1 à 500 nanomètre.

La dernière étape consiste ensuite à déposer une goutte d'épilame 3 sur la zone désirée.

Selon une première variante de l'invention, la couche d'accroche 40 est agencée pour être invisible ou transparente. Cette caractéristique permet d'avoir une couche d'accroche 40 sans détériorer le visuel du substrat. En effet, l'intérêt d'avoir un substrat 20 doré ou rhodié est d'avoir un effet visuel supérieur. Cet effet ne doit donc pas être détérioré par une couche qui va masquer le substrat 20.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention définie par les revendications annexées.

## Revendications

1. Produit épilamé (10) comprenant un substrat (20) sur lequel un épilame (30) est déposé, **caractérisé en ce que** le produit comporte en outre une couche d'accroche (40) située entre le substrat et l'épilame et possédant une affinité chimique avec ledit épilame.

2. Produit selon la revendication 1, **caractérisé en ce que** l'épilame (30) comprend au moins une partie ancre (30a) et une partie fonctionnelle (30b), ladite couche d'accroche ayant une affinité chimique avec ladite partie ancre.

3. Produit selon la revendication 2, **caractérisé en ce que** l'ancre est du type silane et la couche d'accroche (40) est un oxyde.

4. Produit selon la revendication 3, **caractérisé en ce que** l'oxyde de la couche d'accroche (40) est choisi dans la liste comprenant l'oxyde de silicium, l'oxyde d'aluminium, le dioxyde de titane ou une combinaison de ces éléments.

5. Produit selon l'une des revendications 1 à 4, **caractérisé en ce que** le substrat possède peu d'affinité chimique avec l'épilame.

6. Produit selon la revendication 5, **caractérisé en ce que** le substrat (20) est un polymère.

7. Produit selon la revendication 5, **caractérisé en ce que** le substrat (20) présente une surface rhodiée ou dorée.

8. Produit selon l'une des revendications précédentes, **caractérisé en ce que** la couche d'accroche (40) est transparente.

9. Produit selon l'une des revendications précédentes, **caractérisé en ce que** la couche d'accroche a une épaisseur de 1 à 500 nm.

10. Pièce d'horlogerie comprenant un produit épilamé selon l'une des revendications précédentes.
